# EUROPÄISCHE PATENTSCHRIFT

(11) **EP 2 454 140 B1**
(45) Veröffentlichungstag und Bekanntmachung des Hinweises auf die Patenterteilung: **03.07.2013**
(21) Anmeldenummer: 10732910.4
(22) Anmeldetag: 06.07.2010
(51) Int. Cl.: B61F 5/32

(54) **BREMSTRÄGER FÜR FAHRWERKRAHMEN VON SCHIENENFAHRZEUGEN**
BRAKE CARRIER FOR THE BOGIES OF RAIL VEHICLES
SUPPORT DE FREIN POUR DES CADRES DE CHÂSSIS DE VÉHICULES FERROVIAIRES

(30) Priorität: 16.07.2009 AT 11222009
(43) Veröffentlichungstag der Anmeldung: 23.05.2012
(73) Patentinhaber: Siemens AG Österreich, 1210 Wien (AT)
(72) Erfinder: DIEMLING, Anton, 8502 Lannach (AT); HUBMANN, Markus, 8063 Brodingberg (AT); SCHOBEGGER, Gerald, 8051 Graz (AT); DROBESCH, Karl, 9064 Pischeldorf (AT); KÜTER, Christian, 8046 Stattegg (AT); MADRITSCH, Christian, 8010 Graz (AT); SCHANK, Armin, 8020 Graz (AT); SEMRAD, Florian, 8047 Kainbach bei Graz (AT); TEICHMANN, Martin, 8045 Graz (AT); MADRITSCH, Christian, 8010 Graz (AT)
(74) Vertreter: Maier, Daniel Oliver
(86) Internationale Anmeldenummer: PCT/EP2010/059620
(87) Internationale Veröffentlichungsnummer: WO 2011/006795

(56) Entgegenhaltungen:
- CH-A- 373 418
- CH-A- 492 590
- GB-A- 191 022 682
- US-A- 2 374 739
- US-A- 2 821 149
- US-A- 2 928 358

## Beschreibung

Die Erfindung betrifft einen Fahrwerkrahmen von Schienenfahrzeugen mit zumindest einem Bremsträger und zumindest einer Bremsvorrichtung, wobei der Bremsträger einen torsionsweichen offenen Querschnitt aufweist und wobei die Anbindung des Bremsträgers an die beiden Längsträger des Fahrwerkrahmens als starre gelenkfreie Verbindung ausgeführt ist.

Zur Befestigung der Bremsvorrichtungen in Fahrwerkrahmen für Schienenfahrzeuge werden oftmals Bremsträger als Querträger in den Fahrwerkrahmen eingefügt.

Damit wird das entstehende Bremsmoment auf den Fahrwerkrahmen übertragen.

Aus der DE 14 55 189 A1 ist ein wiegenloses Drehgestell für ein Eisenbahnfahrzeug bekannt, welches C-förmige und somit einen torsionsweichen und offenen Querschnitt aufweisende Querträger umfasst.

Auch die DE 25 43 558 A1 sowie die CH 492 590 A zeigen torsionsweiche Querträger mit offenem Querschnitt.

Durch den Bremsträger wird das Gewicht des Fahrwerkes erhöht, überdies führt die Einleitung des Bremsmomentes zu unerwünschten Belastungen des Fahrwerkrahmens.

Der Erfindung liegt die Aufgabe zugrunde, eine verbesserte Lösung für den Bremsträger anzugeben.

Erfindungsgemäß geschieht dies dadurch, dass die Bremsvorrichtung in der Weise an dem Bremsträger befestigt ist, dass die Wirklinie der Bremskräfte durch den außerhalb des Querschnittes des Bremsträgers befindlichen Schubmittelpunkt verläuft.

Durch die erfindungsgemäße konstruktive Maßnahme wird eine verdrillingsfreie Querkraftbiegung des Trägers erreicht.

Dadurch kann der Träger gewichtsmäßig leichter aufgebaut werden. Überdies werden die durch die Einleitung des Bremsmomentes in den Fahrwerkrahmen auftretenden unerwünschten Belastungen des Fahrwerkrahmens reduziert.

Der Bremsträger kann in vorteilhafter Weise entweder einen annähernd C-, U-, T- oder I-förmigen Querschnitt aufweisen.

Die Erfindung wird anhand von in den Figuren dargestellten Ausführungsbeispielen näher erläutert.

Es zeigen beispielhaft:
Fig.1 die Anordnung der Bremsträger in einem Fahrwerkrahmen,
Fig.2 die Anbindung eines Bremsträgers an einen Langträger des Fahrwerkrahmens und
Fig. 3 die Anordnung von Bremsvorrichtung und Bremsträger in einem Fahrwerkrahmen.

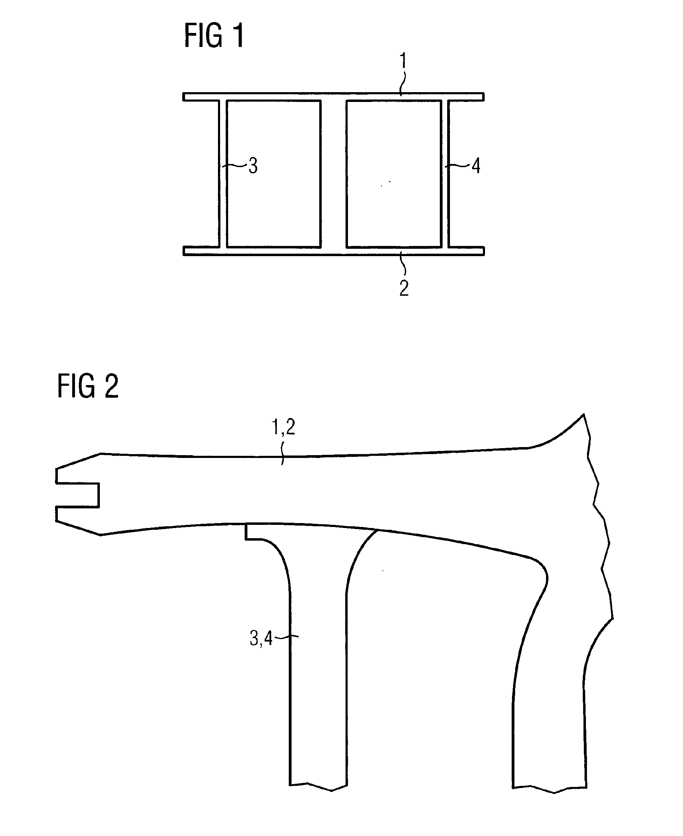

Die schematische Darstellung nach Fig. 1 zeigt einen Fahrwerkrahmen mit zwei Längsträgern 1,2, zwei Bremsträgern 3,4 und einem Querträger.

Wie in Fig. 2 dargestellt sind die Bremsträger 3,4, mit den Längsträgern 1,2 starr und gelenkfrei verbunden. Dies kann beispielsweise durch eine Schweißverbindung geschehen.

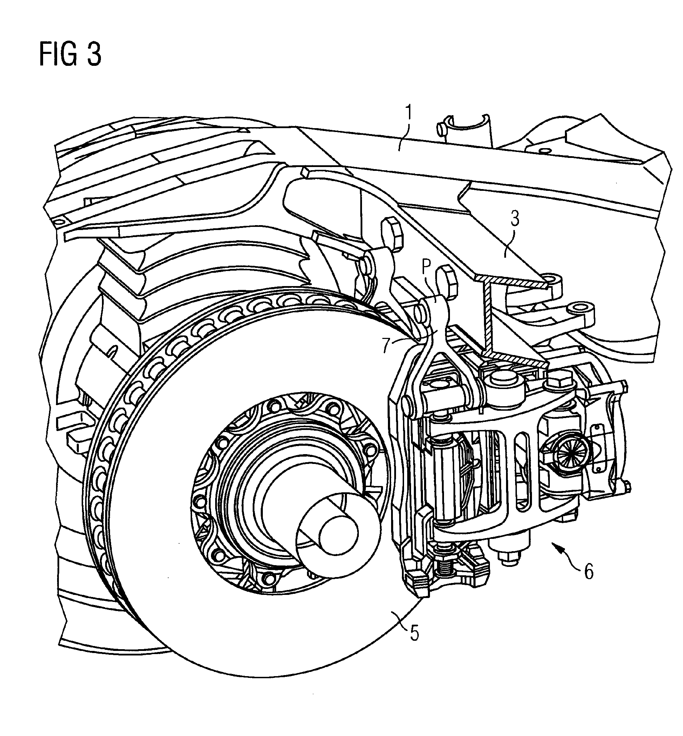

Die Darstellung nach Fig. 3 zeigt eine Bremsvorrichtung 6 mit Bremsscheibe 5, die über eine Hängelasche 7 mit dem Bremsträger 3 mit annähernd C-förmigem Querschnitt verbunden ist.

Durch die am Rücken des C-förmigen Querschnittes am Bremsträger 3 über ein Gelenk und eine Schraubverbindung befestigte Hängelasche 7 verläuft die Wirklinie der Bremskräfte durch den in dieser Position befindlichen Schubmittelpunkt des Bremsträgers.

Der Bremsträger 3 ist aufgrund des offenen Querschnittes verwindeweich, sodass er die Weichheit des Fahrwerkrahmens nicht wesentlich beeinflusst. Damit sind in der Folge auch die konstruktiven Anforderungen an die Primärfederstufe des Fahrwerkes geringer.

Auf Torsion beanspruchte Bauteile mit offenem Querschnitt wie beispielsweise mit C-, U-,T-, oder I-Form sind torsionsweicher als Bauteile mit geschlossenem Querschnitt wie Rohre oder Bauteile mit Rechteckquerschnitt und wesentlich steifer.

Durch die konstruktive Gestaltung von Fahrwerkrahmen und Bremsträger in der Weise, dass die Wirklinie der Bremskräfte durch den außerhalb des Querschnittes des Bremsträgers befindlichen Schubmittelpunkt verläuft, wird eine torsionsfreie Beanspruchung, d.h. eine verdrillungsfreie Querkraftbiegung erzielt.

Damit kann der erfindungsgemäße Bremsträger nicht nur leichter gebaut werden, sondern bringt auch durch die räumliche Trennung von Schubmittelpunkt und physikalischem Träger Vorteile in Bezug auf die konstruktiven Gestaltungsmöglichkeiten des Fahrwerkrahmens.

**Bezugszeichenliste**

| | |
|---|---|
| 1, 2 | Lägsträger |
| 3, 4 | Bremsträger |
| 5 | Bremsscheibe |
| 6 | Bremsvorrichtung |
| 7 | Hängelasche |
| P | Schubmittelpunkt |

## Patentansprüche

1. Fahrwerkrahmen von Schienenfahrzeugen mit zumindest einem Bremsträger und zumindest einer Bremsvorrichtung, wobei der Bremsträger (3,4)einen torsionsweichen offenen Querschnitt aufweist, und wobei die Anbindung des Bremsträgers an die beiden Längsträger (1,2) des Fahrwerkrahmens als starre gelenkfreie Verbindung ausgeführt ist, **dadurch gekennzeichnet, dass** die Bremsvorrichtung (6) in der Weise an dem Bremsträger (3,4)befestigt ist, dass die Wirklinie der Bremskräfte durch den außerhalb des Querschnittes des Bremsträgers (3,4) befindlichen Schubmittelpunkt (P) dieses Querschnittes verläuft.

2. Fahrwerkrahmen nach Anspruch 1, **dadurch gekennzeichnet, dass** der Bremsträger (3,4)einen annähernd C-förmigen Querschnitt aufweist.

3. Fahrwerkrahmen nach Anspruch 1, **dadurch gekennzeichnet, dass** der Bremsträger (3,4)einen annähernd U-förmigen Querschnitt aufweist.

4. Fahrwerkrahmen nach Anspruch 1, **dadurch gekennzeichnet, dass** der Bremsträger (3,4)einen annähernd T-förmigen Querschnitt aufweist.

5. Fahrwerkrahmen nach Anspruch 1, **dadurch gekennzeichnet, dass** der Bremsträger(3,4) einen annähernd I-förmigen Querschnitt aufweist.

## Claims

1. Undercarriage frame for rail vehicles which has at least one brake carrier and at least one braking mechanism, wherein the brake carrier (3,4) has a torsionally soft, open cross-section, and wherein the attachment of the brake carrier to the two longitudinal members (1,2) of the undercarriage frame is implemented as a rigid, non-articulated connection, **characterised in that** the braking mechanism (6) is secured to the brake carrier (3,4) in such a way that the line of action of the braking forces runs through the shear centre (P) of the cross-section which is located outside said cross-section of the brake carrier (3,4).

2. Undercarriage frame according to claim 1, **characterised in that** the brake carrier (3,4) has an approximately C-shaped cross-section.

3. Undercarriage frame according to claim 1, **characterised in that** the brake carrier (3,4) has an approximately U-shaped cross-section.

4. Undercarriage frame according to claim 1, **characterised in that** the brake carrier (3,4) has an approximately T-shaped cross-section.

5. Undercarriage frame according to claim 1, **characterised in that** the brake carrier (3,4) has an approximately I-shaped cross-section.

## Revendications

1. Cadre de châssis de véhicules ferroviaires comportant au moins un support de frein et au moins un dispositif de freinage, dans lequel le support de frein (3, 4) présente une section transversale ouverte souple en torsion, et dans lequel le raccordement du support de frein aux deux longerons (1, 2) du cadre de châssis est réalisé sous la forme d'un assemblage rigide non articulé, **caractérisé en ce que** le dispositif de freinage (6) est fixé au support de frein (3, 4) de sorte que la ligne d'action des forces de freinage passe par le centre de cisaillement (P) de cette section transversale, centre qui se trouve en dehors de la section transversale du support de frein (3, 4).

2. Cadre de châssis selon la revendication 1, **caractérisé en ce que** le support de frein (3, 4) présente une section transversale se rapprochant de la forme d'un C.

3. Cadre de châssis selon la revendication 1, **caractérisé en ce que** le support de frein (3, 4) présente une section transversale se rapprochant de la forme d'un U.

4. Cadre de châssis selon la revendication 1, **caractérisé en ce que** le support de frein (3, 4) présente une section transversale se rapprochant de la forme d'un T.

5. Cadre de châssis selon la revendication 1, **caractérisé en ce que** le support de frein (3, 4) présente une section transversale se rapprochant de la forme d'un I.
